# EUROPEAN PATENT APPLICATION

(11) **EP 1 940 112 A2**
(43) Date of publication of application: **02.07.2008**
(21) Application number: 07123982.6
(22) Date of filing: 21.12.2007
(51) Int. Cl.: H04L 29/06, H04L 29/14

(54) **Method for protecting against failures of the Mobile IP home agent, AAA server, and radio access network gateway apparatus**

(30) Priority: 27.12.2006 JP 2006352746
(71) Applicant: Fujitsu Ltd., Kawasaki-shi, Kanagawa 211-8588 (JP)
(72) Inventor: Ando, Tatsuhiro, Kawasaki-shi, Kanagawa 211-8588 (JP); Mizuma, Keiji, Kawasaki-shi, Kanagawa 211-8588 (JP); Suzuki, Hidehiko, Kawasaki-shi, Kanagawa 211-8588 (JP)
(74) Representative: Fenlon, Christine Lesley

(57) **Abstract**

A network connection restoration method of an IP communications system having a radio access network and using Mobile IP for managing the movement of a mobile terminal is disclosed. The network connection restoration method includes the steps of (a) an AAA server selecting a first one of multiple home agents to which one the mobile terminal is to be connected at the time of authenticating the mobile terminal, (b) the AAA server detecting a failure of the selected first one of the home agents by communicating with the selected first one of the home agents, and (c) the AAA server selecting a second one of the home agents in response to step (b) detecting the failure of the selected first one of the home agents.
The foreign agent of an ASN-GW monitors a home agent, and notifies the PMIP (Proxy Mobile IP) client of the ASN-GW of the monitoring result. The PMIP client reacquires a home agent through an AAA server, and reestablishes a foreign agent-home agent tunnel.

## Description

### BACKGROUND OF THE INVENTION

### 1. Field of the Invention

The present invention relates generally to network connection restoration methods, AAA servers, and radio access network gateway apparatuses, and more particularly to a method of restoring the network connection of a mobile terminal at the time of a home agent failure, an AAA server, and a radio access network gateway apparatus in an all-IP network having multiple radio access networks such as WiMAX networks and using Mobile IP for managing movements of mobile terminals.

### 2. Description of the Related Art

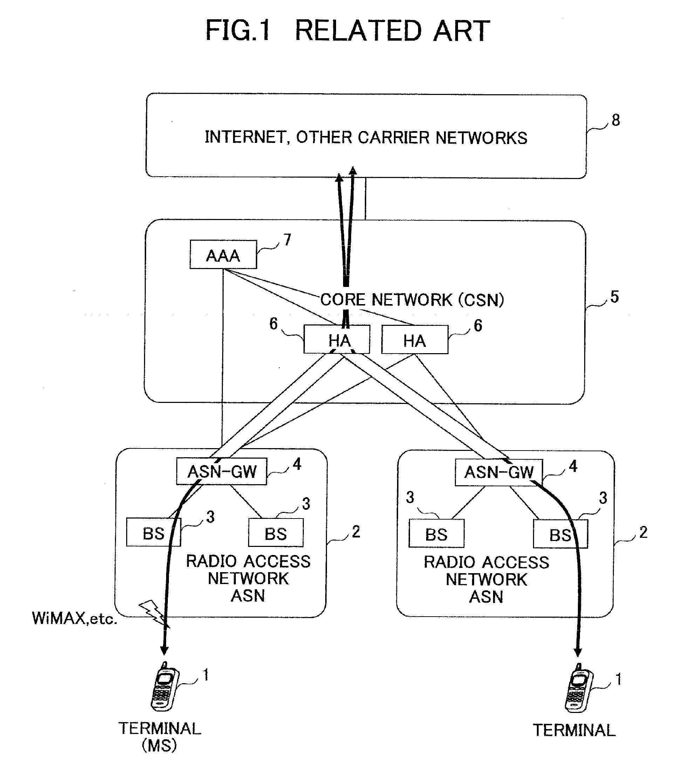

FIG. 1 is a diagram showing a system configuration of a conventional network system using Mobile IP. Referring to FIG. 1, a mobile terminal (MS) 1 is connected to the Internet or other carrier networks 8 from a base station (BS) 3 of a radio access network (ASN: Access Service Network) 2 such as a wireless LAN or a WiMAX (Worldwide Interoperability for Microwave Access) network through an ASN-GW (Access Service Network-Gateway) 4 having a foreign agent (FA) function via a home agent (HA) 6 of a core network (CSN: Connectivity Service Network) 5.

The mobile terminal 1 accesses the home agent 6 from an AAA (Authentication, Authorization, and Accounting) server 7 of the core network 5 through the radio access network 2 with a predetermined updating period, and has its IP address and Mobile IP binding registration updated through DHCP (Dynamic Host Configuration Protocol) updating.

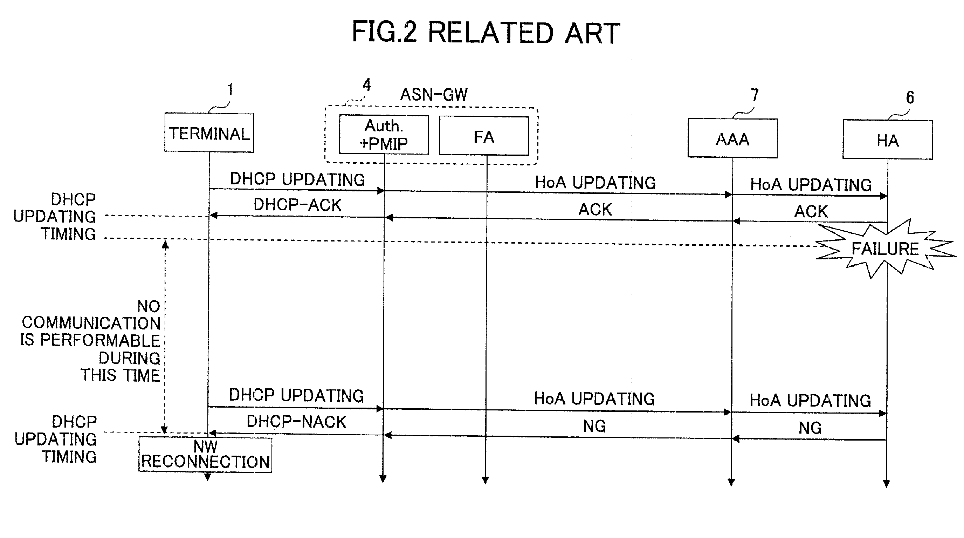

In such a network, if a failure occurs in the home agent 6 so that the function of transferring a user data packet becomes inoperable as shown in FIG. 2, the mobile terminal 1 cannot transmit or receive packets. That is, the mobile terminal 1 is disconnected from the core network 5 so as to interrupt user communications.

According to conventional techniques (for example, Non-Patent Documents 1_ through 4 listed below), a fault or failure (hereinafter referred to collectively as "failure") in the home agent 6 can be detected only through being incapable of updating the IP address and Mobile IP binding registration by DHCP due to inaccessibility of the home agent 6 at the time of updating the IP address and Mobile IP binding registration by DHCP. Therefore, there is a problem in that the mobile terminal 1 cannot perform communications before the next DHCP updating timing after the occurrence of the failure of the home agent 6.

Further, when the mobile terminal 1 connects to the network, the AAA server 7 in the core network 5 only authenticates the mobile terminal 1, and selects a home agent 6 irrespective of the presence or absence of a failure in the home agent 6. Accordingly, there is a problem in that the AAA server 7 may allocate a home agent 6 with a failure to the mobile terminal 1 so as to make it impossible to register binding information with the home agent 6.

The above-described problems are more serious when the mobile terminal 1 is in a wait state than when the mobile terminal 1 is performing application communications. In the wait state, the mobile terminal 1 does not transmit packets to or receive packets from the home agent 6, so that the mobile terminal 1 is not aware that the failure of the home agent 6 has prevented the mobile terminal 1 from performing communications. Therefore, other mobile terminals cannot transmit packets to the mobile terminal 1 in the wait state. That is, there is a problem in that the mobile terminal 1 in the wait state cannot receive incoming packets.

Conventionally, in order to reduce a service suspension period at the time of failure of the home agent 6, it is possible to reduce the DHCP updating period or to provide the home agent 6 with redundancy using a protocol such as VRRP (Virtual Router Redundancy Protocol). However, reducing the DHCP updating period imposes a greater workload of updating on the AAA server 7 and the ASN-GW 4.

Further, providing the home agent 6 with redundancy using a protocol such as VRRP requires one backup apparatus for each home agent or subnet, thus having the problem of an increase in the cost of constructing network facilities.
[Non-Patent Document 1] WiMAX Forum WiMAX End-to-End Network Systems Architecture (Stage 2: Architecture Tenets, Reference Model and Reference Points)
[Non-Patent Document 2] IETF RFC2131: Dynamic Host Configuration Protocol
[Non-Patent Document 3] IETF RFC3344: IP Mobility Support for IPv4
[Non-Patent Document 4] IETF RFC4004: Diameter Mobile IPv4 Application

### SUMMARY OF THE INVENTION

Embodiments of the present invention may solve or reduce one or more of the above-described problems.

According to one embodiment of the present invention, there is provided a network connection restoration method, an AAA server, and a radio access network gateway apparatus in which one or more of the above-described problems may be solved or reduced.

According to one embodiment of the present invention, there is provided a network connection restoration method, an AAA server, and a radio access network gateway apparatus capable of reducing the network disconnection time of a mobile terminal due to a home agent failure without increasing an operational workload on a core network or the cost of facilities.

According to one embodiment of the present invention, there is provided a network connection restoration method of an IP communications system having a radio access network and using Mobile IP for managing a movement of a mobile terminal, the network connection restoration method including the steps of (a) an AAA server selecting a first one of a plurality of home agents to which one the mobile terminal is to be connected at a time of authenticating the mobile terminal, (b) the AAA server detecting a failure of the selected first one of the home agents by communicating with the selected first one of the home agents, and (c) the AAA server selecting a second one of the home agents in response to said step (b) detecting the failure of the selected first one of the home agents.

According to one aspect of the present invention, if a selected home agent has a failure, another home agent is selected. As a result, it is possible to reduce the network disconnection time of a mobile terminal due to a home agent failure without increasing an operational workload on a core network or the cost of facilities.

According to one embodiment of the present invention, there is provided an AAA server authenticating a mobile terminal in an IP communications system having a radio access network and using Mobile IP for managing a movement of the mobile terminal, the AAA server including a home agent selection part configured to select a first one of a plurality of home agents to which one the mobile terminal is to be connected at a time of authenticating the mobile terminal, and a failure detection part configured to detect a failure of the selected first one of the home agents by communicating with the selected first one of the home agents, wherein the home agent selection part is configured to select a second one of the home agents in response to the detection of the failure of the selected first one of the home agents.

According to one aspect of the present invention, if a selected home agent has a failure, a home agent selection part selects another home agent. As a result, it is possible to reduce the network disconnection time of a mobile terminal due to a home agent failure without increasing an operational workload on a core network or the cost of facilities.

According to one embodiment of the present invention, there is provided a radio access network gateway apparatus of an IP communications system having a radio access network and using Mobile IP for managing a movement of the mobile terminal, the radio access network gateway apparatus including a home agent monitoring part configured to monitor operations of a plurality of home agents, and a home agent reacquisition part configured to, in response to the home agent monitoring part detecting a failure of a first one of the home agents, access an AAA server to which the mobile terminal is connected, and to acquire a second one of the home agents as an alternative to the first one of the home agents and reacquire a home address of the mobile terminal.

According to one aspect of the present invention, it is possible to reduce the network disconnection time of a mobile terminal due to a home agent failure without increasing an operational workload on a core network or the cost of facilities.

### BRIEF DESCRIPTION OF THE DRAWINGS

Other objects, features and advantages of the present invention will become more apparent from the following detailed description when read in conjunction with the accompanying drawings, in which:
FIG. 1 is a diagram showing a system configuration of a conventional network system using Mobile IP;
FIG. 2 is a diagram showing a conventional operational sequence;
FIG. 3 is a diagram showing a system configuration of a network system using Mobile IP according to an embodiment of the present invention;
FIG. 4 is a diagram showing a functional configuration of an ASN-GW according to the embodiment of the present invention;
FIG. 5 is a diagram showing a functional configuration of an AAA server according to the embodiment of the present invention;
FIG. 6 is a diagram showing an operational sequence of home agent selection according to the embodiment of the present invention;
FIG. 7 is a diagram showing an operational sequence of home agent monitoring according to the embodiment of the present invention;
FIG. 8 is a diagram showing an operational sequence of home agent switching in the case where a mobile terminal is in an active mode according to the embodiment of the present invention; and
FIG. 9 is a diagram showing an operational sequence of home agent switching in the case where the mobile terminal is in an idle mode according to the embodiment of the present invention.

### DETAILED DESCRIPTION OF THE PREFERRED EMBODIMENTS

A description is given below, with reference to the accompanying drawings, of one or more embodiments of the present invention.

### [Principle of the Present Invention]

According to the present invention, the service suspension time may be reduced by one or more features as described below.

### (a) Home Agent Selecting Function of AAA Server

When a mobile terminal connects to a network, an AAA server performs user authentication and selects one home agent (HA) from multiple home agents. At the same time, the AAA server cooperates with the home agents and monitors the home agents using the processing of allocating an HoA (Home Address) that is an IP address to a mobile terminal. If there is a failure in the selected home agent, the AAA server detects the failure and reallocates a home agent without a failure to the mobile terminal, thereby recovering from (avoiding) a home agent failure.

### (b) Home Agent Monitoring Function of Foreign Agent and PMIP Client

The foreign agent (FA) of an ASN-GW monitors a home agent, and notifies the PMIP (proxy Mobile IP) of the ASN-GW of the monitoring result. The PMIP client reacquires a home agent through an AAA server, and reestablishes a foreign agent-home agent tunnel.

Thus, the PMIP client is provided not on the mobile terminal side but in an ASN-GW on the network (ASN) side, and home agents are switched on the network (ASN) side at the time of a home agent failure. The home agent failure monitoring function, switching of home agents, and reestablishment of a tunnel between a foreign agent and a home agent are not implemented on the mobile terminal side but are all implemented in the ASN-GW on the network (ASN) side.

### (c) Mobile Terminal IP Address (HoA) Switching Function

In the case of switching a failed home agent to a home agent of a subnet different from that of the failed home agent on the network (ASN) side, the HoA (Home Address) that is the IP address of a mobile terminal should be simultaneously changed. However, since the mobile terminal does not support Mobile IP, changing the HoA of the mobile terminal should be controlled from the network side.

Changing the HoA of the mobile terminal cannot be controlled by a usual DHCP procedure. Accordingly, the radio connection of the mobile terminal is terminated from the network (ASN) side, and a reconnection to the network from the mobile terminal is started, thereby changing the HoA.

In a radio access network such as a WiMAX network, a mobile terminal may enter an idle mode (power-saving mode) so as to break only a connection in a wireless (radio) section. Therefore, a solution is made by the PMIP client function determining the radio connection status of the mobile terminal and starting DHCP of the mobile terminal in cooperation with a paging function on the network (ASN) side. When the mobile terminal is in an active mode (operating mode), a solution is made by terminating the radio connection from the network side, thereby causing the mobile terminal to automatically reconnect to the network, and then starting DHCP.

### [System Configuration]

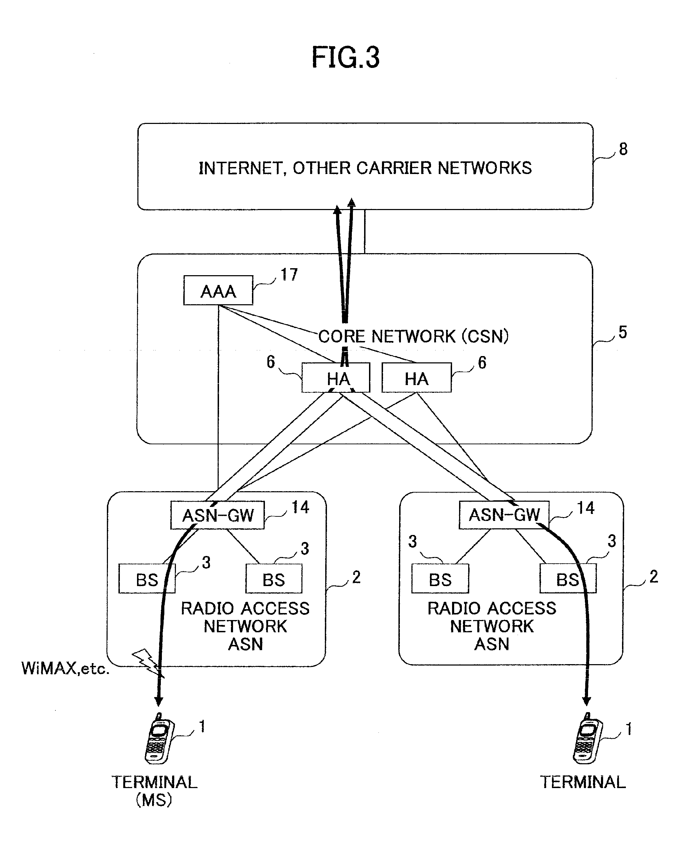

FIG. 3 is a diagram showing a system configuration of a network system using Mobile IP according to an embodiment of the present invention. In FIG. 3, the same elements as those of FIG. 1 are referred to by the same numerals.

In FIG. 3, a network where the IP core network (CSN) 5 using Mobile IP integrates the radio access networks (ASNs) 2 such as a wireless LAN and a WiMAX network is assumed.

In the core network 5, an AAA server 17 performs user authentication, and also performs such control as dynamically selecting one of the multiple home agents 6 for each mobile terminal 1 and allocating the selected one of the home agents 6 to the corresponding mobile terminal 1. Each home agent 6 manages the correspondence between the movement destination address (Care of Address: CoA) of the mobile terminal 1 in the Internet or other carrier networks 8 and the home address (HoA) of the mobile terminal 1.

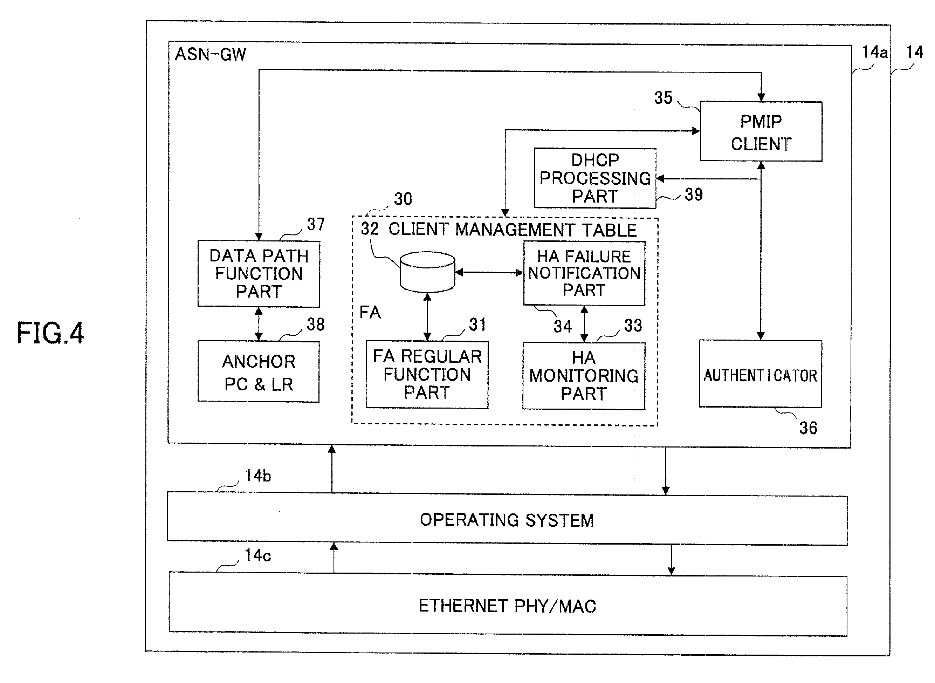

In each radio access network 2, an ASN-GW (radio access network gateway apparatus) 14 monitors the home agents 6 for failures, and notifies a built-in PMIP client 35 (FIG. 4) of detected failures. Further, the ASN-GW 14 also executes control such as establishing a path to another home agent 6 and changing the address of the mobile terminal 1. Each base station 3 controls a radio connection to the mobile terminal 1. The mobile terminal (MS) 1 is periodically subjected to IP address updating of DHCP, and when its radio connection to the radio access network 2 is interrupted, the mobile terminal 1 reconnects thereto and starts binding registration of Mobile IP.

FIG. 4 is a diagram showing a functional configuration of the ASN-GW 14 according to the embodiment of the present invention. Referring to FIG. 4, the ASN-GW 14 includes a ASN-GW function part 14a, an operating system 14b, and an Ethernet function part 14c. In the ASN-GW function part 14a, a foreign agent (FA) 30 includes an FA regular function part 31, a client management table 32, an HA monitoring part 33, and an HA failure notification part 34. The FA regular function part 31 performs processing such as registration of binding information with the home agents 6. The client management table 32 retains the binding information.

The HA monitoring part 33 monitors the multiple home agents 6 in the core network (CSN) 5 using an ICMP (Internet Control Message Protocol) ping or SNMP (Simple Network Management Protocol). When the HA monitoring part 33 detects a home agent failure, the HA failure notification part 34 notifies the PMIP client 35 of the failure.

The PMIP client 35 reacquires a home agent address (that is, acquires the address of another [new] home agent 6) through communications with the AAA server through an authenticator 36, and establishes a tunnel between the foreign agent 30 and the new home agent 6.

Further, the PMIP client 35 is connected to an anchor PC & LR (Paging Controller and Location Register) 38 through a data path function part 37 so as to cause the anchor PC & LR 38 to start paging. The anchor PC & LR 38 manages the location information of the mobile terminal 1 in the idle mode, and pages the mobile terminal 1. The data path function part 37 retains the radio connection status of each mobile terminal 1. A DHCP processing part 39 performs DHCP-related processing.

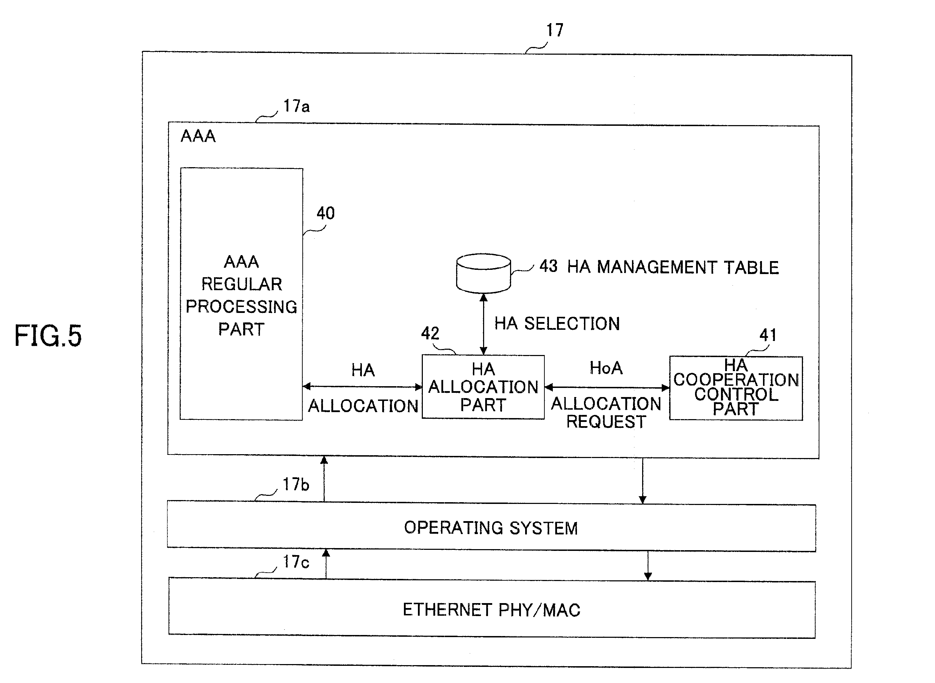

FIG. 5 is a diagram showing a functional configuration of the AAA server 17 according to the embodiment of the present invention. Referring to FIG. 5, the AAA server includes an AAA function part 17a, an operating system (OS) 17b, and an Ethernet function part 17c. In the AAA function part 17a, an AAA regular processing part 40 performs regular user authentication. An HA cooperation control part 41 cooperates with the multiple home agents 6 in the core network 5, and monitors each home agent 6. An HA allocation part 42 selects one of the home agents 6 from an HA management table 43 based on a workload distribution algorithm such as a round robin algorithm when the mobile terminal 1 connects to the network, and retains the correspondence between the mobile terminal and the (selected) home agent 6 in the HA management table 43.

### [Home Agent Selecting Operation]

(a) When the mobile terminal 1 connects to the network, the AAA server 17 not only performs user authentication but also selects one of the home agents 6. At the same time, the AAA server 17 cooperates with the home agents 6 and monitors the home agents 6 using the processing of allocating an HoA (Home Address) to the mobile terminal 1. If there is a failure in the selected home agent 6, the AAA server 17 detects the failure and reallocates another home agent 6 to the mobile terminal 1, thereby recovering from (avoiding) the failure of the home agent 6.

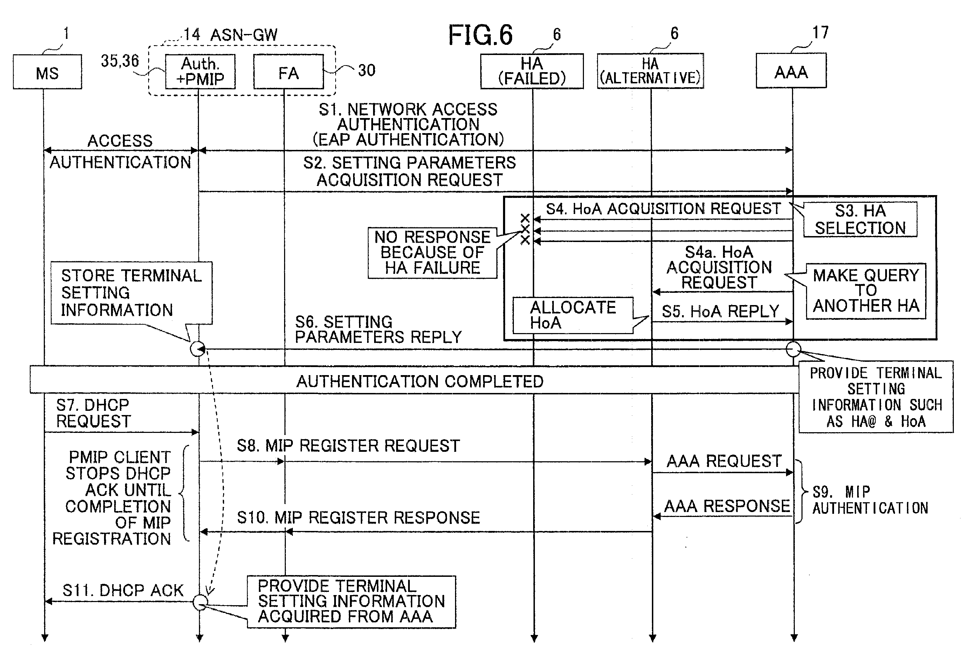

FIG. 6 is a diagram showing an operational sequence of home agent selection according to the embodiment of the present invention.

### Step S1 (Network Access Authentication):

When the mobile terminal 1 accesses the radio access network 2, user authentication is performed between the mobile terminal 1 and the AAA server 17 through the PMIP client 35 and the authenticator 36 of the ASN-GW 14 shown in FIG. 4 in order for the mobile terminal 1 to connect to the core network (CSN) 5.

### Step S2 (Setting Parameters Acquisition Request):

Next, the PMIP client 35 accesses the AAA server 17 again in order to acquire parameters to be set (setting parameters) in the mobile terminal 1 and the PMIP client 35. The setting parameters include the IP address of the home agent 6 and the HoA of the mobile terminal 1.

### Step S3 (Selection of Home Agent 6 in AAA Server 17):

The AAA server 17 dynamically selects the home agent 6 to which the mobile terminal 1 is to connect for each mobile terminal 1. The HA allocation part 42 of the AAA server 17 selects one of the home agents 6 in the HA management table 43 using a workload distribution algorithm such as a round robin algorithm. The algorithm to be used depends on the operational policy of the telecommunication carrier.

### Step S4 (HoA Acquisition Request):

The HoA, which is the IP address of the mobile terminal 1, is managed and allocated not by the AAA server 17 but by the home agent 6. Accordingly, an HoA acquisition request is made to the selected home agent 6 through the HA cooperation control part 41 of the AAA server 17.

At this point, it is possible to check whether the home agent has experienced a failure. That is, if the home agent 6 makes no response even after the AAA server 17 has transmitted the HoA acquisition request thereto multiple (for example, three) times, the home agent 6 is regarded as having experienced a failure. The HoA acquisition request is repeated at intervals of, for example, several tens to several hundreds of ms.

### Step S4a (HoA Reacquistion Request):

If the AAA server 17 regards the selected home agent 6 as having suffered a failure, the AAA server 17 selects another one of the home agents 6, and makes an HoA acquisition request the same as in step S4. If this (newly selected) home agent 6 is also in a failure mode, the AAA server 17 repeats the same HoA acquisition request process as step S4a until a normal-mode home agent 6 is detected and the HoA is acquired.

### Step S5 (HoA Allocation and HoA Reply in Home Agent 6):

If the home agent 6 is in a normal operating mode, the home agent 6 allocates an HoA to the mobile terminal 1 and responds to the AAA server 17.

In general, the processing workload for the management of the HoA with respect to each mobile terminal is large because it is necessary to manage the updating of the HoA by monitoring each terminal using a timer. Accordingly, the HoA is allocated and managed not by the AAA server 17 managing all users connecting to the network but by the corresponding home agent 6.

### Step S6 (Setting Parameters Reply):

Parameters (that is, the IP address of the home agent 6, the HoA of the mobile terminal 1, etc.) are returned in response to the parameters acquisition request of step S2. Usually, the mobile terminal 1 is designed so as to acquire various network parameters by the DHCP procedure. Therefore, the parameters are retained in the PMIP client 35, assuming that the parameters are to be inserted into a DHCP protocol message to the mobile terminal 1. Authentication of the mobile terminal 1 is completed here.

### Step S7 (DHCP Request from Mobile Terminal):

The mobile terminal 1 starts DHCP to issue a DHCP request in order to acquire the HoA.

### Step S8 (MIP Register Request):

The PMIP client 35 of the ASN-GW 14 makes a Mobile IP register request to the home agent 6 via the foreign agent 30 in order to have binding information registered with the home agent 6.

### Step S9 (MIP Authentication):

When the home agent 6 receives the Mobile IP register request from the PMIP client 35 via the foreign agent 30, the home agent 6 performs authentication (determines the authenticity of the client) by making a query to the AAA server 17.

### Step S10 (MIP Register Response):

The home agent 6 responds to the register request of step S8 in accordance with the MIP authentication result.

### Step S11 (DHCP Response to Mobile Terminal):

The PMIP client 35, using the DHCP processing part 39, returns the network setting parameters (including the HoA of the mobile terminal 1) acquired from the AAA server 17 and retained in the process of step S6 as a DHCP response message.

(b) The foreign agent 30 monitors the home agent 6, and notifies the PMIP client 35 of the monitoring result. The PMIP client 35 acquires another (new) home agent 6 through the AAA server 17, and establishes a tunnel between the foreign agent 30 and the new home agent 6. Further, the PMIP client 35 is provided on the network (foreign agent) side, and home agents 6 are switched on the network (ASN) side at the time of a home agent failure. The home agent failure monitoring function, home agent 6 switching, and reestablishment of a foreign agent 30-home agent 6 tunnel are not implemented in the mobile terminal 1 but are all implemented on the network (ASN) side.

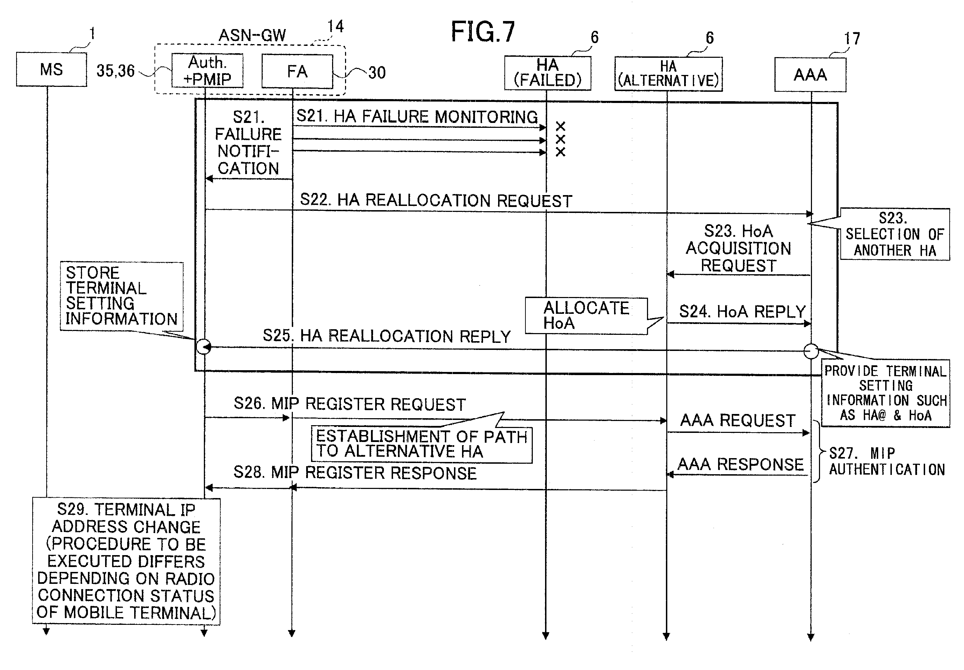

FIG. 7 is a diagram showing an operational sequence of home agent monitoring according to the embodiment of the present invention.

### Step S21 (HA Failure Monitoring and Notification):

The foreign agent 30 monitors the home agent 6 for a failure using a method such as an ICMP ping or SNMP, and when detecting a failure, notifies the PMIP client 35 of each of related ASN-GWs 14 of the detected failure.

### Step S22 (HA Reallocation Request):

The PMIP client 35 makes a home agent 6 reallocation request to the AAA server 17 through the authenticator 36.

### Step S23 (HA Reselection and HoA Reacquisition Request):

The AAA server 17 selects another one of the home agents 6 in the HA management table 43, and makes an HoA (mobile terminal IP address) reacquisition request in cooperation with the (newly selected) home agent.

### Step S24 (HoA Allocation and Reply by Home Agent 6):

The home agent 6 allocates an HoA to the mobile terminal 1, and replies to the AAA server 17 the same as in step S5 of FIG. 6.

### Step S25 (Home Agent 6 Reallocation Reply):

The AAA server 17 returns parameters in response to the HA reallocation request of step S22 the same as in step S6.

### Step S26 (MIP Register Request):

The PMIP client 35 of the ASN-GW 14 makes a Mobile IP register request to the reallocated home agent 6 in order to have binding information registered with the reallocated home agent 6.

### Step S27 (MIP Authentication):

When the home agent 6 receives the Mobile IP register request from the PMIP client 35 via the foreign agent 30, the home agent 6 performs authentication (determines the authenticity of the client) by making a query to the AAA server 17.

### Step S28 (MIP Register Response):

The home agent 6 responds to the register request of step S26.

### Step S29 (Mobile Terminal HoA Change):

The procedure to be executed differs depending on the radio connection status of the mobile terminal 1.

(c) In the case of switching home agents 6 on the network (ASN) side, the HoA (the IP address of the mobile terminal 1) should also be simultaneously changed. However, since the mobile terminal 1 does not support Mobile IP, changing the HoA of the mobile terminal 1 should be controlled from the network side. Changing the HoA of the mobile terminal 1 cannot be controlled by a usual DHCP procedure. Accordingly, the radio connection of the mobile terminal 1 is first terminated from the network (ASN) side, and a reconnection to the network from the mobile terminal 1 is started, thereby changing its IP address.

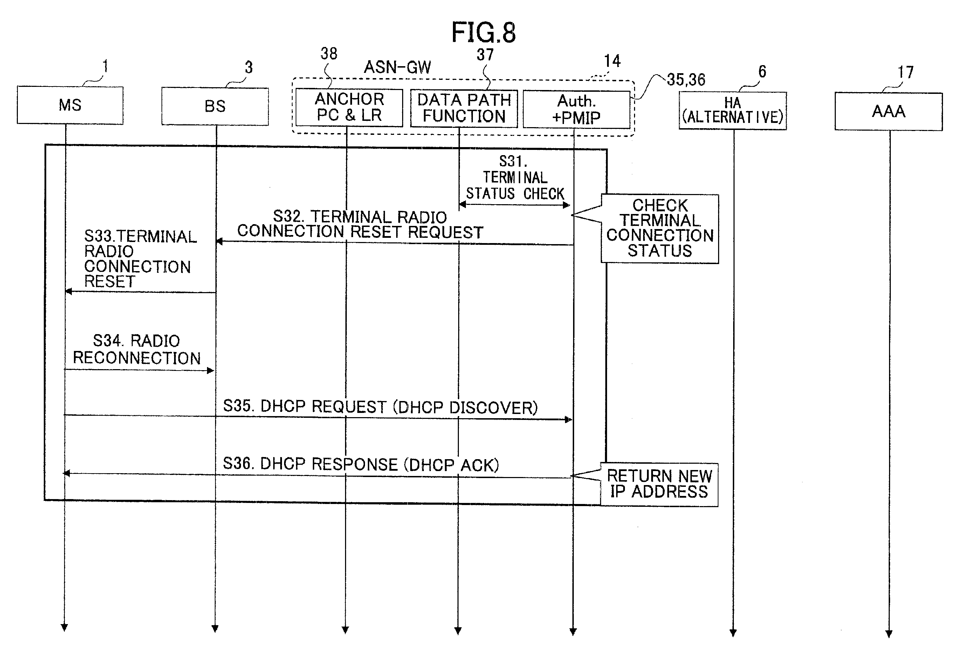

FIG. 8 is a diagram showing an operational sequence of home agent switching in the case where the mobile terminal 1 is in the active mode according to the embodiment of the present invention.

### Step S31 (Mobile Terminal Status Check):

A query is made to the data path function part 37 of the ASN-GW 14 in order to check the radio connection status of the mobile terminal 1.

### Step S32 (Mobile Terminal Radio Connection Reset Request):

As a result of step S31, if the mobile terminal 1 is in the active mode (establishing a radio connection), the PMIP client 35 transmits a control message to the corresponding base station (BS) 3 so as to cause the base station 3 to terminate (reset) the radio connection of the mobile terminal 1.

### Step S33 (Mobile Terminal Radio Connection Reset):

The base station 3 resets the radio connection of the mobile terminal 1 at the request of the ASN-GW 14.

### Step S34 (Mobile Terminal Radio Reconnection):

The mobile terminal 1 performs a reconnecting operation because its radio connection is reset by the base station 3.

### Step S35 (DHCP Request):

The mobile terminal 1 issues a DHCP request at the time of reestablishing the radio connection.

### Step S36 (DHCP Response):

The authenticator 36, in cooperation with the PMIP client 35, returns an already acquired HoA as the IP address of the mobile terminal 1 in response to the DHCP request from the mobile terminal 1.

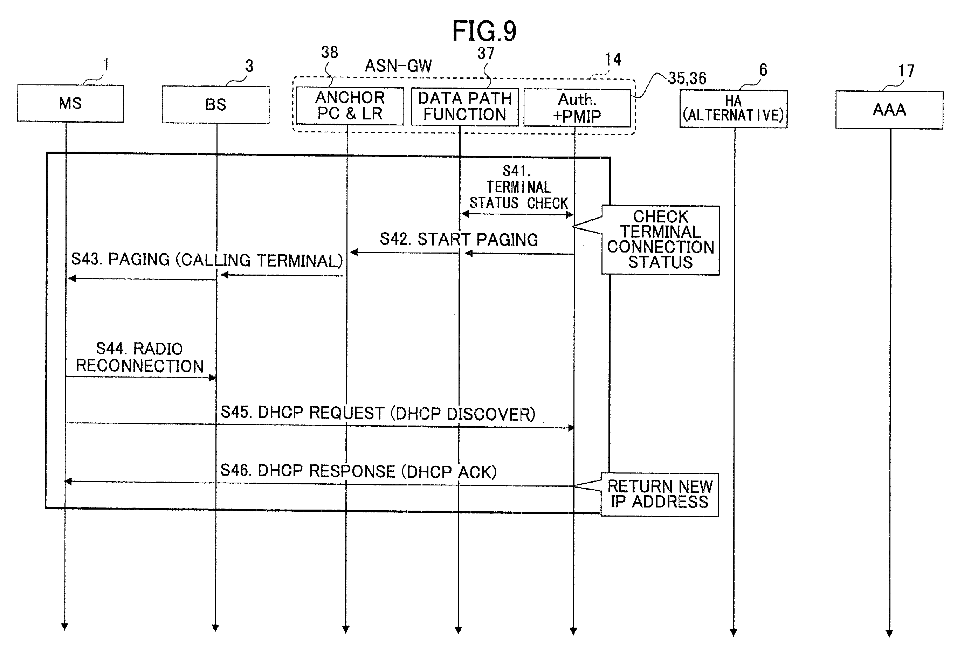

FIG. 9 is a diagram showing an operational sequence of home agent switching in the case where the mobile terminal 1 is in the idle mode according to the embodiment of the present invention.

### Step S41 (Mobile Terminal Status Check):

A query is made to the data path function part 37 of the ASN-GW 14 in order to check the radio connection status of the mobile terminal 1.

### Step S42 (Mobile Terminal Paging Start):

If the mobile terminal 1 is in the idle mode (power-saving mode), the radio connection of the mobile terminal 1, which is for the PMIP client 35 to reset, has already been terminated at the time of entering the idle mode. Accordingly, the same procedure as in FIG. 8 cannot be used. Therefore, first, the mobile terminal 1 is paged (called) and awakened (activated). The PMIP client 35 starts paging in cooperation with the data path function part 37 and the anchor PC & LR 38.

Here, the anchor PC & LR 38 manages the location information of the mobile terminal 1 in the idle mode, and performs paging. At the time of entering the idle mode, the mobile terminal 1 registers with the anchor PC (Paging Controller) and breaks the radio connection in order to reduce power consumption. However, since it is necessary to page (call) the mobile terminal 1 at the time of transmitting a packet to the mobile terminal 1, the mobile terminal 1 periodically registers location information with the LR (Location Register).

### Step S43 (Paging [Mobile Terminal Calling]):

All of the base stations 3 that have received a paging request from the anchor PC & LR 38 call the mobile terminal 1 using broadcast in the corresponding areas.

### Step S44 (Mobile Terminal Radio Reconnection):

The mobile terminal 1 performs a reconnecting operation because its radio connection is terminated by the corresponding base station 3.

### Step S45 (DHCP Request):

The mobile terminal 1 issues a DHCP request at the time of reestablishing the radio connection.

### Step S46 (DHCP Response):

The authenticator 36, in cooperation with the PMIP client 35, returns an already acquired HoA as the IP address of the mobile terminal 1 in response to the DHCP request from the mobile terminal 1.

One or more of the above-described operations (a) through (b) make it possible to switch a home agent 6 with a failure to a normally operating home agent 6 and make it possible for the mobile terminal 1 to access the core network (CSN) 5 via a new IP address and the new home agent 6.

As a result, it is possible to reduce the service suspension time of a user due to failure of the home agent 6. That is, conventionally, after the home agent 6 suffers a failure, the connection to the radio access network 2 is terminated so that the mobile terminal 1 cannot receive a call or information from the outside such as the other end of communication until the time of updating the IP address of the mobile terminal 1. On the other hand, according to one embodiment of the present invention, it is possible to reduce the time during which the connection is interrupted, so that it is possible to minimize the effect of failure of the home agent 6.

According to one embodiment of the present invention, there is provided a network connection restoration method of an IP communications system having a radio access network and using Mobile IP for managing a movement of a mobile terminal, the network connection restoration method including the steps of (a) an AAA server selecting a first one of multiple home agents to which one the mobile terminal is to be connected at the time of authenticating the mobile terminal, (b) the AAA server detecting a failure of the selected first one of the home agents by attempting to communicate with the selected first one of the home agents, and (c) the AAA server selecting a second one of the home agents in response to step (b) detecting the failure of the selected first one of the home agents.

According to one aspect of the present invention, if a selected home agent experiences a failure, another home agent is selected. As a result, it is possible to reduce the network disconnection time of a mobile terminal due to a home agent failure without increasing the operational workload on a core network or the cost of facilities.

Additionally, the network connection restoration method may further include the steps of (d) the radio access network monitoring operations of the home agents, and (e) the radio access network accessing the AAA server, and acquiring a third one of the home agents as an alternative to the selected first one of the home agents and reacquiring the home address of the mobile terminal in response to step (d) detecting the failure of the selected first one of the home agents.

Additionally, in the network connection restoration method, the radio access network may include a proxy Mobile IP client function corresponding to the Mobile IP client function of the mobile terminal, and the radio access network may terminate a radio connection to the mobile terminal in response to the detection of the failure of the selected first one of the home agents, and the home address of the mobile terminal may be switched by the mobile terminal reconnecting to the radio access network after the radio connection is terminated.

Additionally, in the network connection restoration method, the radio access network may include a proxy Mobile IP client function corresponding to the Mobile IP client function of the mobile terminal, the radio access network may page the mobile terminal in response to the mobile terminal being in an idle mode at the time of the detection of the failure of the selected first one of the home agents, and the home address of the mobile terminal may be switched by the mobile terminal reconnecting to the radio access network.

According to one embodiment of the present invention, there is provided an AAA server authenticating a mobile terminal in an IP communications system having a radio access network and using Mobile IP for managing the movement of the mobile terminal, the AAA server including a home agent selection part configured to select a first one of multiple home agents to which one the mobile terminal is to be connected at the time of authenticating the mobile terminal, and a failure detection part configured to detect a failure of the selected first one of the home agents by communicating with the selected first one of the home agents, wherein the home agent selection part is configured to select a second one of the home agents in response to the detection of the failure of the selected first one of the home agents.

According to one aspect of the present invention, if a selected home agent has a failure, a home agent selection part selects another home agent. As a result, it is possible to reduce the network disconnection time of a mobile terminal due to a home agent failure without increasing the operational workload on a core network or the cost of facilities.

According to one embodiment of the present invention, there is provided a radio access network gateway apparatus of an IP communications system having a radio access network and using Mobile IP for managing a movement of the mobile terminal, the radio access network gateway apparatus including a home agent monitoring part configured to monitor operations of multiple home agents, and a home agent reacquisition part configured to, in response to the home agent monitoring part detecting a failure of a first one of the home agents, access an AAA server to which the mobile terminal is connected, and to acquire a second one of the home agents as an alternative to the first one of the home agents and reacquire the home address of the mobile terminal.

According to one aspect of the present invention, it is possible to reduce the network disconnection time of a mobile terminal due to a home agent failure without increasing the operational workload on a core network or the cost of facilities.

Additionally, the radio access network gateway apparatus may further include a proxy Mobile IP client part corresponding to the Mobile IP client function of the mobile terminal, and a radio connection termination part configured to terminate a radio connection to the mobile terminal in response to the detection of the failure of the first one of the home agents, wherein the home address of the mobile terminal may be switched by the mobile terminal reconnecting to the radio access network after the radio connection is terminated.

Additionally, the radio access network gateway apparatus may further include a proxy Mobile IP client part corresponding to the Mobile IP client function of the mobile terminal; and a paging part configured to page the mobile terminal in response to the mobile terminal being in an idle mode at a time of the detection of the failure of the first one of the home agents, wherein the home address of the mobile terminal may be switched by the mobile terminal reconnecting to the radio access network.

The HA allocation part 42 may correspond to the above-described home agent selection part. The HA cooperation control part 41 may correspond to the above-described failure detection part. The HA monitoring part 33 may correspond to the above-described home agent monitoring part. The PMIP client 35 and the authenticator 36 may correspond to the above-described home agent reacquisition part. The PMIP client 35 may correspond to the above-described proxy Mobile IP client part and the above-described radio connection termination part. The anchor PC & LR 38 may correspond to the above-described paging part.

The present invention is not limited to the specifically disclosed embodiment, and variations and modifications may be made without departing from the scope of the present invention.

## Claims

1. A network connection restoration method of an IP communications system having a radio access network and using Mobile IP for managing a movement of a mobile terminal, **characterized by** the steps of:
(a) an AAA server selecting a first one of a plurality of home agents to which one the mobile terminal is to be connected at a time of authenticating the mobile terminal;
(b) the AAA server detecting a failure of the selected first one of the home agents by communicating with the selected first one of the home agents; and
(c) the AAA server selecting a second one of the home agents in response to said step (b) detecting the failure of the selected first one of the home agents.

2. The network connection restoration method as claimed in claim 1, further **characterized by** the steps of:
(d) the radio access network monitoring operations of the home agents; and
(e) the radio access network accessing the AAA server, and acquiring a third one of the home agents as an alternative to the selected first one of the home agents and reacquiring a home address of the mobile terminal in response to said step (d) detecting the failure of the selected first one of the home agents.

3. The network connection restoration method as claimed in claim 2, **characterized in that**:
the radio access network includes a proxy Mobile IP client function corresponding to a Mobile IP client function of the mobile terminal, and
the radio access network terminates a radio connection to the mobile terminal in response to the detection of the failure of the selected first one of the home agents, and the home address of the mobile terminal is switched by the mobile terminal reconnecting to the radio access network after the radio connection is terminated.

4. The network connection restoration method as claimed in claim 2, **characterized in that**:
the radio access network includes a proxy Mobile IP client function corresponding to a Mobile IP client function of the mobile terminal, and
the radio access network pages the mobile terminal in response to the mobile terminal being in an idle mode at a time of the detection of the failure of the selected first one of the home agents, and the home address of the mobile terminal is switched by the mobile terminal reconnecting to the radio access network.

5. An AAA server authenticating a mobile terminal in an IP communications system having a radio access network and using Mobile IP for managing a movement of the mobile terminal, **characterized by**:
a home agent selection part configured to select a first one of a plurality of home agents to which one the mobile terminal is to be connected at a time of authenticating the mobile terminal; and
a failure detection part configured to detect a failure of the selected first one of the home agents by communicating with the selected first one of the home agents,
wherein the home agent selection part is configured to select a second one of the home agents in response to the detection of the failure of the selected first one of the home agents.

6. A radio access network gateway apparatus of an IP communications system having a radio access network and using Mobile IP for managing a movement of the mobile terminal, **characterized by**:
a home agent monitoring part configured to monitor operations of a plurality of home agents; and
a home agent reacquisition part configured to, in response to the home agent monitoring part detecting a failure of a first one of the home agents, access an AAA server to which the mobile terminal is connected, and to acquire a second one of the home agents as an alternative to the first one of the home agents and reacquire a home address of the mobile terminal.

7. The radio access network gateway apparatus as claimed in claim 6, further **characterized by**:
a proxy Mobile IP client part corresponding to a Mobile IP client function of the mobile terminal; and
a radio connection termination part configured to terminate a radio connection to the mobile terminal in response to the detection of the failure of the first one of the home agents,
wherein the home address of the mobile terminal is switched by the mobile terminal reconnecting to the radio access network after the radio connection is terminated.

8. The radio access network gateway apparatus as claimed in claim 6, further **characterized by**:
a proxy Mobile IP client part corresponding to a Mobile IP client function of the mobile terminal; and
a paging part configured to page the mobile terminal in response to the mobile terminal being in an idle mode at a time of the detection of the failure of the first one of the home agents,
wherein the home address of the mobile terminal is switched by the mobile terminal reconnecting to the radio access network.
